Europäisches Patentamt

European Patent Office

Office européen des brevets

(11) Publication number: **0 303 579**
**A1**

## EUROPEAN PATENT APPLICATION

(21) Application number: **88830341.9**

(22) Date of filing: **12.08.88**

(51) Int. Cl.⁴: **F 16 D 41/18**

(30) Priority: **13.08.87 IT 946187**

(43) Date of publication of application:
**15.02.89 Bulletin 89/07**

(84) Designated Contracting States: **AT DE ES FR GB**

(71) Applicant: **Bondioli, Edi**
**Via Gina Bianchi 18**
**46029 Suzzara Mantova (IT)**

(72) Inventor: **Bondioli, Edi**
**Via Gina Bianchi 18**
**46029 Suzzara Mantova (IT)**

(74) Representative: **Mannucci, Gianfranco, Dott.-Ing.**
**Ufficio Tecnico Ing. A. Mannucci Via della Scala 4**
**I-50123 Firenze (IT)**

(54) **Freewheel transmission device, housed partially in the shaft and partially in a transmitting member mounted on said shaft.**

㉗ Radial pawls radially movable within seats (320) formed in the shaft (301) (and possibly in a thickening (301A) thereof) cooperate through their external asymmetric ends (322A, 322B) with nonsymmetrically shaped seats (318) peripherally disposed in a housing of the drive member (312); in the shaft an axial cavity (324) houses an axially movable, shaped core (326), with elastic means (328) reacting to the axial movement of said core, caused by said pawls due to the centripetal thrust of the pawls in the direction of rotation opposite to that causing the motion transmission, the central core having a frustoconical surface (326A) apt to cooperate with the inner ends of the pawls.

Fig.1

EP 0 303 579 A1

## Description

## FREEWHEEL TRANSMISSION DEVICE, HOUSED PARTIALLY IN THE SHAFT AND PARTIALLY IN A TRANSMITTING MEMBER MOUNTED ON SAID SHAFT

The invention refers to a unidirectional i.e. a freewheel device for the transmission between a shaft and a drive member fitted on the shaft. Said device has advantages as far as the structural and functional simplicity is concerned, and very limited overall dimensions. Further objects and advantages will risult from the following description.

Substantially, the device comprises: a set of pawls radially movable within seats formed in the shaft (and on a possible thickening solid thereto to ensure the guiding of the pawls), said pawls having inner and outer ends; in said drive member housing with peripheral shaped seats to cooperate with the outer shaped ends of the pawl; inside the shaft an axial cavity for receiving a shaped core axially movable for the operation, with elastic means reacting to the axial movement of said core; and on said core shapings and inclined surfaces. Both the outer ends of pawls (322) and the seats (318) for same pawls have asymmetric shapings with profiles for a mutual engagement in the direction of the motion transmission, and inclined profiles for the thrust in centripetal direction of the pawls in the opposite direction of rotation; the inner ends of the pawls are shaped as an inclined plane and the central core is shaped with a frustoconical surface to cooperate with said inclined planes, the inclinations being greater than those of the angle of friction; further the spring means axially acting on the core are calibrated, so that their action is won by the action of the pawls during their freewheel operating phase and causes a radial centrifugal thrust for the automatic return to the motion transmission condition.

The profiles of the outer ends of the pawls and of the seats thereof may be so shaped as to be able to push the pawls outwardly in the condition of motion transmission.

The device may be combined to a gear drive and in this case the housing for accommodating at least partially the pawl assembly, may be formed in the body of said gear, and in particularly in the larger portion of the body of a bevel gear.

When the device is in an oil bath, radial passages may be provided for the lubrication, between the gear teeth and as far as the axial cavity of the shaft, with a manifold provided in the cooperating surfaces of said member and said shaft.

The invention will be better understood by following the description and the attached drawing, which shows a practical, non limitative exemplification of the same invention. In the drawing:

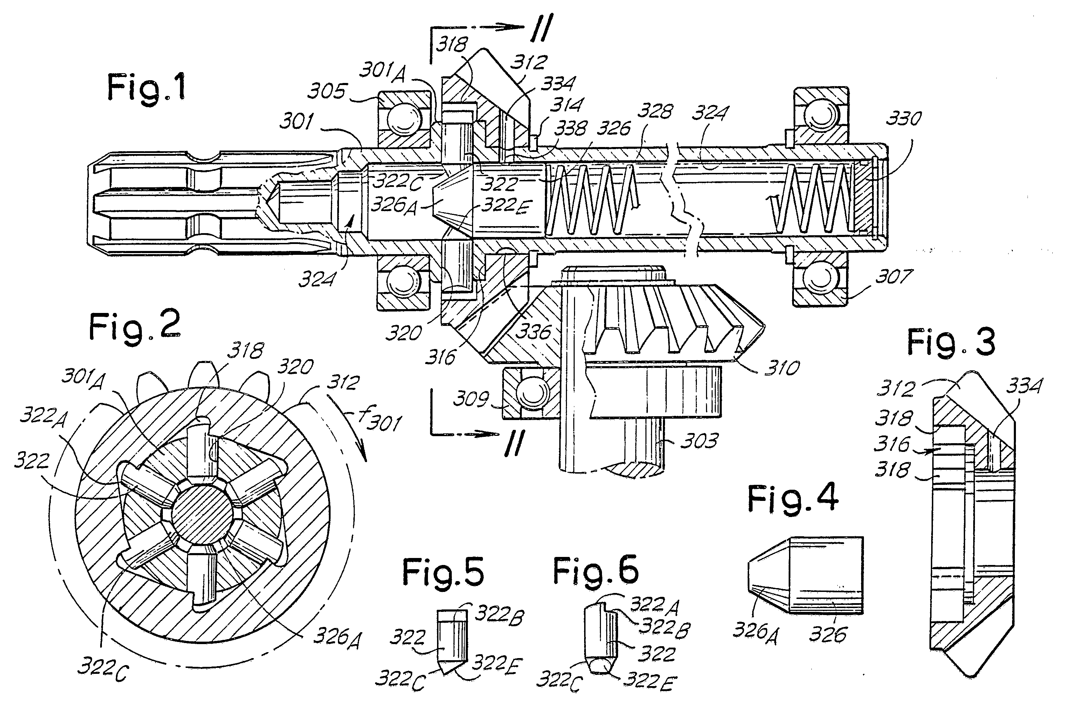

Figs.1 and 2 show, in longitudinal section and in cross section on line II-II of Fig.1, a freewheel device in engaged condition;

Figs.3 and 4 show two device components;

Figs.5 and 6 show two views of a pawl making part of the device; and

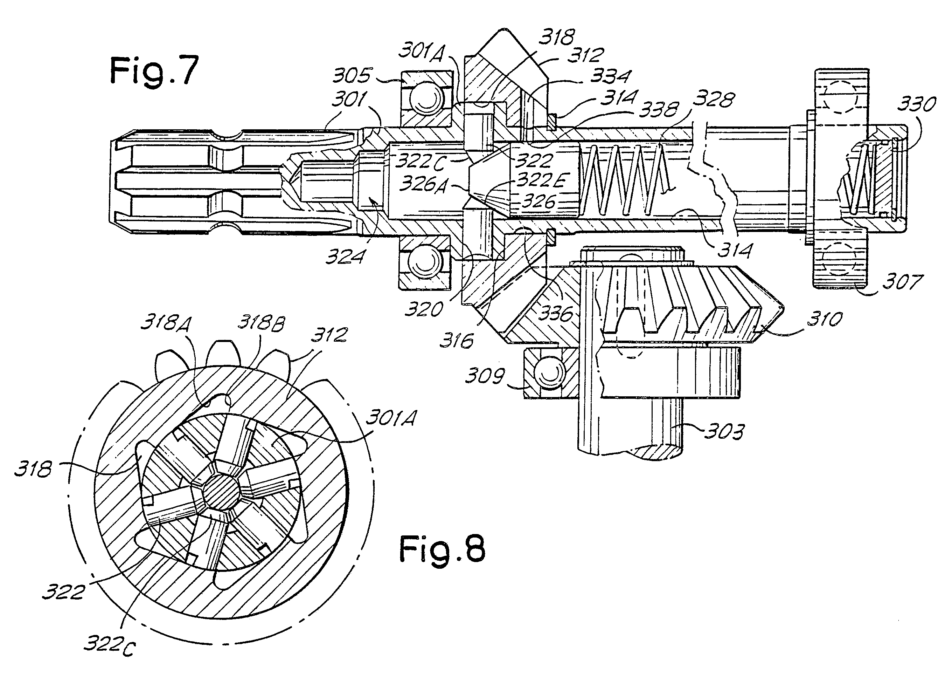

Figs.7 and 8 show the device similarly to Figs.1 and 2, but in disengaged condition.

The drawing shows a unidirectional, i.e. a freewheel transmission device which can be introduced in the transmission between two shafts orthogonal to each other. Numeral 301 indicates one of the two shafts and numeral 303 the other shaft orthogonal to the previous one. Shaft 301 is mounted with bearings 305 and 307, while numeral 309 indicates one of the bearings of shaft 303. On shaft 303, a bevel gear 310 is keyed, which meshes with a bevel gear 312 mounted on shaft 301 to rotate freely thereon, but also to be coupled thereto through the freewheel device to be described. Gear 312 is retained between an annular thickening 301A of shaft 301 and an elastic ring mounted in an annular groove of same shaft. Gear 312 is capable of rotating with respect to shaft 301 but is prevented from performing relative axial displacements. The wider part of the frustoconical body of bevel gear 312 has a cylindrical wall housing 316. which is apt to receive, at least partially, the thickening 301A of shaft 301. In the cylindrical wall perimetrically delimiting said housing 316, seats 318 are formed being shaped with a portion of inclined profile 318A and with an arcuate end portion 318B, the latter having a surface, at least radially disposed, or even with a counterslope in the same direction of the inclination of surface 318A but with an angle (relative to the radial direction) far lower than that of the same surface 318A. Seats 318 are circumferentially distributed in a symmetrical manner, corresponding to the distribution and number of seats 318 and radial cylindrical through seats 320 are formed in the thickening 301A, mostly for a corresponding number of radial pawls 322 able to slide in respective seats 320. The outer end of each pawl 322 has a surface 322A with an inclination corresponding, at least partially, to that of surface 318A in the seats 318 and with a step-like shaping which matches, at least partially, the portion 318B of seats 318. The inner end of each pawl 322 has a frustoconical shaping 322C and an inclined flat 322E. The pawls outer ends 322A, 322B are able to cooperate with the side surface of the housing 316 and with the seats 318, while the pawls inner ends 322C project within an axial cavity 324 which is formed in the shaft 301 starting from the right end thereof (looking at the drawing). Inside the cavity 324 a core 326 is housed that is capable of sliding within same cavity and is urged towards the left side (looking at the drawing) by a spring 328, which operates a compression between the core 326 and a disc 330 mounted at the end of shaft 301 with a retaining means such as an elastic ring or the like. Core 326 has a cylindrical portion for the guided sliding and a frustoconical portion 326A, whose inclination substantially corresponds to the inclination of the flats 322E of pawls 322 which, therefore, are resting on the frustoconical surface of portion 326A, each one along one line.

Spring 328 urges the core 326 in such a direction as to urge, in turn, the pawls 322 in centrifugal direction against the perimetral wall of cavity 316, in such a way that the pawls are pushed within the seats 318. As a consequence. the shaft 301, being considered the driving member, is able to transmit the motion to gear 312 according to arrow f301, while a reverse displacement of shaft 301 does not transmit the motion to gear 312. In addition, a movement of gear 312 according to arrow f301, relative to shaft 301, is not followed by a corresponding movement of same shaft 301.

This is due to the fact that the pawl shapings 322B engage the shapings 318B of seats 318 in the relative direction of rotation, according to f301, of shaft 301 with respect to gear 312 which is thus driven into motion. A reverse relative movement of shaft 301 with respect to the gear is not transmitted since pawls 322 are urged in centripetal direction by the inclined surfaces 318A which act on the pawl profiles 322A by centripetally urging them against surface 326A and determining a sliding of core 326 in a direction opposite to the one according to which it is urged by spring 328. Substantially, spring 328 tends to urge the pawls into engagement and thus to cause the coupling for a drive according to f301 of gear 312 through shaft 301, respectively for a drive of shaft 301 through gear 312 in a direction opposite to arrow f301. When a reverse relative movement occurs, with respect to those indicated, said pawls 322 tend to be urged in centripetal direction against surface 326A and cause the elastic yielding of core 326 in the axial direction against the action of springs 328, in order to allow the pawl skipping with respect to the seats 318 of housing 316.

An efficient lubrication within a box containing gears 310, 312 dipped in oil bath, is obtainable by providing a circulation system which includes a hole or a set of holes 334 in the body of gear 312 in correspondence of the slot between adjacent teeth. To said hole(s) 334, a manifold 336 and one or several holes 338 leading to the cavity 324 correspond on shaft 301 to ensure both the lubrication of the core which must slide within the axial cavity 324 and of the pawls 322 which have to slide with respect to the surface 326A of core 326, and of the seats 320 provided for the pawls and for other elements.

## Claims

1. A unidirectional. i.e. a freewheel transmission device between a shaft (301) and at least a drive member (312) on the shaft, characterized in that it comprises: a set of pawls (322) radially movable within seats (320) formed in the shaft and on a possible thickening (301A) solid thereto to ensure the guiding of the pawls, said pawls having inner and outer shaped ends (322A, 322B, 322E); in said drive member (312) a housing (316); in said housing (316) nonsymmetrically shaped seats (318) to cooperate with the outer shaped ends of the pawls; inside the shaft an axial cavity (324) for receiving a shaped core (326) axially movable for the operation, with elastic means (328) reacting to the axial movement of said core; and on said core shapings and inclined surfaces (326A) both the outer ends of pawls (322) and the seats (318) for same pawls having asymmetric shapings with profiles (318B, 322B) for a mutual engagement in the direction of the motion transmission, and inclined profiles (318A, 322A) for the thrust in centripetal direction of the pawls in the opposite direction of rotation; the inner ends of the pawls being shaped as an inclined plane (322E) and the central core (326) being shaped with a frustoconical surface (326A) to cooperate with said inclined planes (322E), the inclinations being greater than those of the angle of friction; and the spring means (328) axially acting on the core being calibrated, so that their action is won by the action of the pawls during their freewheel operating phase and causes a radial centrifugal thrust for the automatic return to the motion transmission condition.

2. Unidirection, i.e. freewheel transmission device according to claim 1, characterized in that the profiles (322B) of the outer ends (318B) of the pawls and of the seats thereof are so shaped as to be able to push the pawls outwardly in the condition of motion transmission.

3. Unidirectional, i.e. frewheel transmission device according to claims 1 and 2 comprising a shaft and at least a gear drive member (312) on said shaft, characterized in that the housing (316) for accommodating at least partially the pawl assembly is formed in the body of said gear, and in particular in the larger portion of the body of a bevel gear.

4. Unidirectional, i.e. freewheel transmission device, according to claim 3, characterized in that it of comprises radial passages (334, 336, 338) between the gear teeth and as far as the axial cavity of the shaft, with a manifold provided in the cooperating surfaces of said member and said shaft.

Fig.1

Fig.2

Fig.3

Fig.4

Fig.5

Fig.6

305
301A
301
312
334
314
338 326 328 324
330
318
322C
326A
322
322E
324
320
316
336
310
309
303

318
301A
320
312
322A
ƒ301
322
326A
322C

312
318
316
318
334

326A
326

322
322B
322C
322E

322A
322B
322
322C
322E

EP 0 303 579 A1

Fig.7

Fig.8

EP 0 303 579 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 001 566 (DAIMLER-BENZ) <br> * Whole document * | 1,3,4 | F 16 D 41/18 |
| Y | | 2 | |
| Y | US-A-4 102 154 (DAHLSTRAND) <br> * Whole document * | 2 | |
| A | | 1 | |
| Y | GB-A- 945 296 (HALL) <br> * Whole document * | 1,3 | |
| Y | GB-A- 764 293 (CROFTS) <br> * Whole document * | 1,3 | |

TECHNICAL FIELDS SEARCHED (Int. Cl.4)

F 16 D 41/00
F 16 D 43/00
F 16 D 7/00
F 16 D 11/00

The present search report has been drawn up for all claims

| Place of search | Date of completion of the search | Examiner |
|---|---|---|
| THE HAGUE | 10-11-1988 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)